# EUROPEAN PATENT APPLICATION

(11) **EP 4 525 545 A1**
(43) Date of publication of application: **19.03.2025**
(21) Application number: 23819098.7
(22) Date of filing: 06.06.2023
(51) Int. Cl.: H04W 74/08

(54) **COMMUNICATION METHOD AND APPARATUS**

(30) Priority: 09.06.2022 CN 202210653486; 26.07.2022 CN 202210882961
(71) Applicant: Huawei Technologies Co., Ltd., Shenzhen, Guangdong 518129 (CN)
(72) Inventor: WANG, Bichai, Shenzhen, Guangdong 518129 (CN); LI, Xueru, Shenzhen, Guangdong 518129 (CN)
(74) Representative: MERH-IP Matias Erny Reichl Hoffmann Patentanwälte PartG mbB
(86) International application number: PCT/CN2023/098506
(87) International publication number: WO 2023/236933

(57) **Abstract**

This application relates to a communication method and apparatus. A first device generates a first UWB frame, and sends the first UWB frame on a first channel. A first field of the first UWB frame includes a first-type preamble symbol, a second field of the first UWB frame includes a second-type preamble symbol, the first field is a first synchronization field in a synchronization header of the first UWB frame, and the second-type preamble symbol is used to perform channel access or resource selection. The first-type preamble symbol has a first-type format, and the second-type preamble symbol has a specific second-type format. Embodiments of this application additionally provide a preamble symbol used to perform channel access or resource selection. The additionally provided preamble symbol has a specific format. A device may determine, by detecting the preamble symbol in the format, whether a channel is busy, and does not need to detect preamble symbols in an excessive quantity of formats. Therefore, detection complexity of preamble symbols can be reduced, and power consumption of the device can also be reduced.

## Description

### CROSS-REFERENCE TO RELATED APPLICATIONS

This application claims priority to Chinese Patent Application No. 202210653486.3, filed with the China National Intellectual Property Administration on June 9, 2022 and entitled "UWB CHANNEL ACCESS METHOD", which is incorporated herein by reference in its entirety. This application claims priority to Chinese Patent Application No. 202210882961.4, filed with the China National Intellectual Property Administration on July 26, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In an ultra-wide band (ultra-wide band, UWB) technology, nanosecond-scale short pulses may be sent to implement high-precision positioning or data transmission. To reduce interference between different devices, a UWB device may perform clear channel assessment (clear channel assessment, CCA) before sending a signal. If determining that a channel is idle, the UWB device may perform sending. If determining that a channel is not idle, the UWB device cannot perform sending. Currently, six different CCA modes are defined, and may be mainly classified into two types: One type is CCA based on energy detection, and the other type is CCA based on preamble detection.

In the CCA based on preamble detection, if a device that performs the CCA detects a preamble symbol (preamble symbol) from another UWB device, the device considers that a channel is busy, and the device cannot access the channel. A preamble symbol is generated by using a preamble sequence, and there may be a large quantity of formats of available preamble sequences in one channel. For example, according to an existing protocol, each channel may support two sequences having a length of 31, four sequences having a length of 127, and eight sequences having a length of 91. In this case, when performing the CCA, the UWB device needs to perform blind detection on preamble symbols in all formats, causing both high complexity and high power consumption.

### SUMMARY

Embodiments of this application provide a communication method and apparatus, to reduce detection complexity of preamble symbols and reduce power consumption of a device.

According to a first aspect, a communication method is provided. The method may be performed by a first device, may be performed by another device having a function of a first device, or may be performed by a chip system or another functional module. The chip system or the functional module can implement the function of the first device, and the chip system or the functional module is, for example, disposed in the first device. The first device is, for example, a network device or a terminal device. For example, the first device has a UWB function. The method includes: generating a first UWB frame, where a first field of the first UWB frame includes a first-type preamble symbol, a second field of the first UWB frame includes a second-type preamble symbol, the first field is a first synchronization field in a synchronization header of the first UWB frame, the second-type preamble symbol is used to perform channel access or resource selection, the first-type preamble symbol has a first-type format, and the second-type preamble symbol has a second-type format; and sending the first UWB frame on a first channel.

In this embodiment of this application, the first UWB frame generated by the first device may include the second-type preamble symbol, and the second-type preamble symbol is used to perform channel access or resource selection. In addition, the second-type preamble symbol has the second-type format. For example, if another device needs to perform channel access, for example, perform CCA, the device can determine, by detecting the second-type preamble symbol having the second-type format, whether a channel is busy. This is equivalent to that embodiments of this application additionally provide a preamble symbol used to perform channel access or resource selection. The additionally provided preamble symbol has a specific format. The device may determine, by detecting the preamble symbol in the format, whether a channel is busy, and does not need to detect preamble symbols in an excessive quantity of formats. Therefore, detection complexity of preamble symbols can be reduced, and power consumption of the device can also be reduced.

In an optional implementation, the first-type preamble symbol is used to perform synchronization, ranging, or channel estimation, or the first-type preamble symbol and the second-type preamble symbol are used to perform synchronization, ranging, or channel estimation. A receiving device of the first UWB frame may not detect the second-type preamble symbol, but performs synchronization, ranging, channel estimation, or the like only by detecting the first-type preamble symbol. This helps reduce the detection complexity. Alternatively, a receiving device may detect both the first-type preamble symbol and the second-type preamble symbol, to perform synchronization, ranging, channel estimation, or the like based on the two types of preamble symbols. This helps improve accuracy of a processing result.

In an optional implementation, the first-type preamble symbol is not used to perform channel access or resource selection. In this embodiment of this application, channel access or resource selection is performed by using the second-type preamble symbol, and the first-type preamble symbol is not used to perform channel access or resource selection. A device that performs channel access or resource selection may not need to detect the first-type preamble symbol, so that the detection complexity can be reduced.

In an optional implementation, the second field is a second synchronization field in the synchronization header. The second field may be the second synchronization field in the synchronization header. In this case, the device that performs channel access or resource selection may detect the second-type preamble symbol as early as possible, to improve efficiency of channel access or resource selection.

In an optional implementation, the first UWB frame further includes a physical header and/or a physical load, and the physical header and/or the physical load include or includes resource reservation information indicating a resource reserved by the first device. For example, if a service executed by the first device is a periodic service, the first device may need to perform transmission by using a periodic resource. In this case, the first device may reserve a resource in one or more periodicities by using the resource reservation information, so that the first device does not need to separately send, for each resource, a message for resource selection, thereby reducing transmission overheads.

In an optional implementation, the synchronization header further includes an SFD field, and the SFD field includes the second-type preamble symbol. The first UWB frame includes the resource reservation information, and the device that performs resource selection may select a resource by obtaining the resource reservation information. In this case, in addition to detecting the second synchronization field in the synchronization header, the device further needs to detect the SFD field, so that the physical header and/or the physical payload can be continuously detected. Therefore, it may be assumed that the SFD field also includes the second-type preamble symbol, and a format of the second-type preamble symbol is known by the device, so that the device can detect the SFD field by detecting the second-type preamble symbol, and does not need to detect the first-type preamble symbol, thereby reducing the detection complexity of the device.

In an optional implementation, the second field includes a plurality of segments, one or more second-type preamble symbols are carried between adjacent segments in the plurality of segments, and a quantity of repetitions of a parameter of the second-type preamble symbol between the adjacent segments is a preset value. Optionally, the second field includes a physical header and/or a physical payload in the first UWB frame. For example, the second field may alternatively be the physical header and/or the physical payload, and the synchronization header of the first UWB frame does not need to be changed. The device that performs channel access or resource selection can also determine, by detecting the second-type preamble symbol in the physical header and/or the physical payload, whether a channel is busy, or determine an unavailable resource.

In an optional implementation, the method further includes: sending first configuration information, where the first configuration information is used to configure a parameter of the second-type preamble symbol; or negotiating with another device to determine a parameter of the second-type preamble symbol; or a parameter of the second-type preamble symbol being a preset value. Optionally, a second device is, for example, a receiving device (or a target receiving device) of the first UWB frame. The parameter of the second-type preamble symbol may be predefined, for example, may be a predefined preset value (for example, the preset value may be predefined according to a protocol, or may be predefined by a communication system to which the first device belongs, or may be predefined by a manufacturer of the first device). For a plurality of devices, duration of second synchronization fields of sent UWB frames is consistent, and a receiving device of the UWB frame does not need to detect the second-type preamble symbol, but may determine the duration of the second synchronization field based on the parameter of the second-type preamble symbol, to detect another field. The device that performs channel access or resource selection can detect the second-type preamble symbol. Alternatively, the parameter of the second-type preamble symbol may be configured by the first device, or may be determined by the first device through negotiation with another device, or the like. The another device includes, for example, the second device and/or a third device, or includes neither the second device nor a third device.

In an optional implementation, the parameter of the second-type preamble symbol includes a format of the second-type preamble symbol; or the parameter of the second-type preamble symbol includes a format of the second-type preamble symbol and a quantity of repetitions of the second-type preamble symbol; or the parameter of the second-type preamble symbol includes a format of the second-type preamble symbol, a quantity of repetitions of the second-type preamble symbol, and an interval between two adjacent second-type preamble symbols. The format of the second-type preamble symbol may indicate, for example, a value of each element included in the second-type preamble symbol and an arrangement order of the elements. That is, the second-type preamble symbol may be determined based on the format of the second-type preamble symbol. The quantity of repetitions of the second-type preamble symbol is, for example, a quantity of repetitions of the second-type preamble symbol in the second field, and/or a quantity of repetitions of the second-type preamble symbol in another field. In the second field or the another field, the second-type preamble symbols may be continuously distributed, or may be discretely distributed. Therefore, the parameter of the second-type preamble symbol may include an interval between two adjacent second-type preamble symbols, and the interval is represented by, for example, duration. In conclusion, the format of the second-type preamble symbol may be determined based on the parameter of the second-type preamble symbol, or both the format of the second-type preamble symbol and an arrangement (for example, a quantity of repetitions or an interval) of the second-type preamble symbol may be determined.

In an optional implementation, the second-type preamble symbol is applicable to all UWB devices in a system to which the first device belongs; or the second-type preamble symbol is applicable to a first-type channel, and the first channel belongs to the first-type channel; or the second-type preamble symbol is configured by a group header device, and the group header device is a management device in a communication groupto which the first device belongs; or the second-type preamble symbol is determined by the first device through negotiation with at least one device. There may be a plurality of configuration manners of the second-type preamble symbol. This is not specifically limited.

In an optional implementation, preamble code for generating the second-type preamble symbol is a ternary autocorrelation sequence or an m-sequence. For example, a length of the ternary autocorrelation sequence may be 31, 91, 127, or the like. Alternatively, another existing sequence may be used as preamble code for generating the second-type preamble symbol. This is not limited.

According to a second aspect, another communication method is provided. The method may be performed by a third device, may be performed by another device having a function of a third device, or may be performed by a chip system or another functional module. The chip system or the functional module can implement the function of the third device, and the chip system or the functional module is, for example, disposed in the third device. The third device is, for example, a network device or a terminal device. For example, the third device has a UWB function. Optionally, the third device is a device that performs channel access or resource selection. The method includes: detecting a first UWB frame from a first device on a first channel in a process of performing channel access or resource selection, where a first field of the first UWB frame includes a first-type preamble symbol, a second field of the first UWB frame includes a second-type preamble symbol, the first field is a first synchronization field in a synchronization header of the first UWB frame, the first-type preamble symbol has a first-type format, and the second-type preamble symbol has a second-type format; and determining a busy/idle state of the first channel or an unavailable resource on the first channel based on a detection result of the second-type preamble symbol in the second field.

In an optional implementation, the method further includes: skipping determining the busy/idle state of the first channel based on the first-type preamble symbol, and skipping determining the unavailable resource on the first channel based on the first-type preamble symbol.

In an optional implementation, the determining a busy/idle state of the first channel based on a detection result of the second-type preamble symbol in the second field includes: if it is detected that energy of one second-type preamble symbol in the second field is greater than a first threshold, determining that the first channel is busy; or if it is detected that average energy of a plurality of second-type preamble symbols in the second field is greater than a second threshold, determining that the first channel is busy. Whether a channel is busy may be determined by detecting one second-type preamble symbol, so that efficiency can be improved. Alternatively, whether a channel is busy may be determined by detecting a plurality of second-type preamble symbols, to improve accuracy of a determining result.

In an optional implementation, the second field is a second synchronization field in the synchronization header of the first UWB frame.

In an optional implementation, the determining an unavailable resource on the first channel based on a detection result of the second-type preamble symbol in the second field includes: detecting, based on a detection result of the second-type preamble symbol in the second synchronization field, the second-type preamble symbol included in an SFD field in the synchronization header; and decoding, based on a detection result of the SFD field, a physical header and/or a physical load included in the first UWB frame; obtaining resource reservation information included in the physical header and/or the physical load, where the resource reservation information indicates a resource reserved by the first device; and determining that the resource reserved by the first device is the unavailable resource. If the first UWB frame includes the SFD field, this detection and decoding manner may be used.

In an optional implementation, the determining an unavailable resource on the first channel based on a detection result of the second-type preamble symbol in the second field includes: decoding, based on a detection result of the second-type preamble symbol in the second synchronization field, a physical header and/or a physical load included in the first UWB frame; obtaining resource reservation information included in the physical header and/or the physical load, where the resource reservation information indicates a resource reserved by the first device; and determining that the resource reserved by the first device is the unavailable resource. If the first UWB frame does not include an SFD field, this detection and decoding manner may be used.

In an optional implementation, the synchronization header further includes an SFD field, and the SFD field includes the second-type preamble symbol.

In an optional implementation, the second field includes the physical header and/or the physical payload in the first UWB frame.

In an optional implementation, the method further includes: receiving first configuration information from the first device, where the first configuration information is used to configure a parameter of the second-type preamble symbol; or negotiating with the first device to determine a parameter of the second-type preamble symbol; or a parameter of the second-type preamble symbol being a preset value.

In an optional implementation, the parameter of the second-type preamble symbol includes a format of the second-type preamble symbol; or the parameter of the second-type preamble symbol includes a format of the second-type preamble symbol and a quantity of repetitions of the second-type preamble symbol; or the parameter of the second-type preamble symbol includes a format of the second-type preamble symbol, a quantity of repetitions of the second-type preamble symbol, and an interval between two adjacent second-type preamble symbols.

In an optional implementation, the second-type preamble symbol is applicable to all UWB devices in a system to which the first device belongs; or the second-type preamble symbol is applicable to a first-type channel, and the first channel belongs to the first-type channel; or the second-type preamble symbol is configured by a group header device, and the group header device is a management device in a communication group to which the first device belongs; or the second-type preamble symbol is determined by the first device through negotiation with at least one device.

For technical effects brought by the second aspect or some optional implementations, refer to the descriptions of the technical effects of the first aspect or the corresponding implementations.

According to a third aspect, still another communication method is provided. The method may be performed by a second device, may be performed by another device having a function of a second device, or may be performed by a chip system or another functional module. The chip system or the functional module can implement the function of the second device, and the chip system or the functional module is, for example, disposed in the second device. The second device is, for example, a network device or a terminal device. For example, the second device has a UWB function. The method includes: detecting a first UWB frame from a first device on a first channel, where a first field of the first UWB frame includes a first-type preamble symbol, a second field of the first UWB frame includes a second-type preamble symbol, the first field is a first synchronization field in a synchronization header of the first UWB frame, the second-type preamble symbol is used to perform channel access or resource selection, the first-type preamble symbol has a first-type format, and the second-type preamble symbol has a second-type format; and performing synchronization, ranging, or channel estimation based on the first-type preamble symbol, or performing synchronization, ranging, or channel estimation based on the first-type preamble symbol and the second-type preamble symbol.

In an optional implementation, the second field is a second synchronization field in the synchronization header.

In an optional implementation, the method further includes: receiving first configuration information from the first device, where the first configuration information is used to configure a parameter of the second-type preamble symbol; or negotiating with the first device to determine a parameter of the second-type preamble symbol; or a parameter of the second-type preamble symbol being a preset value.

In an optional implementation, the parameter of the second-type preamble symbol includes a format of the second-type preamble symbol; or the parameter of the second-type preamble symbol includes a format of the second-type preamble symbol and a quantity of repetitions of the second-type preamble symbol; or the parameter of the second-type preamble symbol includes a format of the second-type preamble symbol, a quantity of repetitions of the second-type preamble symbol, and an interval between two adjacent second-type preamble symbols.

In an optional implementation, the method further includes: receiving second configuration information from the first device, where the second configuration information is used to configure that an SFD field included in the synchronization header includes the first-type preamble symbol or the second-type preamble symbol.

In an optional implementation, the second field includes a physical header and/or a physical payload of the first UWB frame.

In an optional implementation, the second-type preamble symbol is applicable to all UWB devices in a system to which the first device belongs; or the second-type preamble symbol is applicable to a first-type channel, and the first channel belongs to the first-type channel; or the second-type preamble symbol is configured by a group header device, and the group header device is a management device in a communication group to which the first device belongs; or the second-type preamble symbol is determined by the first device through negotiation with at least one device.

For technical effects brought by the third aspect or the various optional implementations, refer to the descriptions of the technical effects of the first aspect or the corresponding implementations.

According to a fourth aspect, a communication apparatus is provided. The communication apparatus may be the first device according to the first aspect, or a communication device including the first device, or a functional module in the first device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. The transceiver unit may be referred to as a sending unit (also referred to as a sending module sometimes) when implementing the sending function, and the transceiver unit may be referred to as a receiving unit (also referred to as a receiving module sometimes) when implementing the receiving function. The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

The processing unit is configured to generate a first UWB frame, where a first field of the first UWB frame includes a first-type preamble symbol, a second field of the first UWB frame includes a second-type preamble symbol, the first field is a first synchronization field in a synchronization header of the first UWB frame, and the second-type preamble symbol is used to perform channel access or resource selection. The transceiver unit (or the sending unit) is configured to send the first UWB frame on a first channel.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the first device according to the first aspect.

According to a fifth aspect, another communication apparatus is provided. The communication apparatus may be the third device according to the second aspect, or a communication device including the third device, or a functional module in the third device, for example, a baseband apparatus or a chip system. The communication apparatus includes a processing unit (also referred to as a processing module sometimes) and a transceiver unit (also referred to as a transceiver module sometimes). For descriptions of the transceiver unit, refer to the fourth aspect.

The transceiver unit (or the receiving unit) is configured to detect a first UWB frame from a first device on a first channel in a process of performing channel access or resource selection, where a first field of the first UWB frame includes a first-type preamble symbol, a second field of the first UWB frame includes a second-type preamble symbol, and the first field is a first synchronization field in a synchronization header of the first UWB frame. The processing unit is configured to: determine a busy/idle state of the first channel or an unavailable resource on the first channel based on a detection result of the second-type preamble symbol in the second field.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the third device according to the second aspect.

According to a sixth aspect, still another communication apparatus is provided. The communication apparatus may be the second device according to the third aspect, or a communication device including the second device, or a functional module in the second device, for example, a baseband apparatus or a chip system. The communication apparatus includes a processing unit (also referred to as a processing module sometimes) and a transceiver unit (also referred to as a transceiver module sometimes). For descriptions of the transceiver unit, refer to the fourth aspect.

The transceiver unit (or the receiving unit) is configured to detect a first UWB frame from a first device on a first channel, where a first field of the first UWB frame includes a first-type preamble symbol, a second field of the first UWB frame includes a second-type preamble symbol, the first field is a first synchronization field in a synchronization header of the first UWB frame, and the second-type preamble symbol is used to perform channel access or resource selection. The processing unit is configured to: perform synchronization, ranging, or channel estimation based on the first-type preamble symbol, or perform synchronization, ranging, or channel estimation based on the first-type preamble symbol and the second-type preamble symbol.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the second device according to the third aspect.

According to a seventh aspect, a communication apparatus is provided. The communication apparatus may be a first device, or may be a chip or a chip system used in a first device; or the communication apparatus may be a second device, or may be a chip or a chip system used in a second device; or the communication apparatus may be a third device, or may be a chip or a chip system used in a third device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first device, the second device, or the third device according to the foregoing aspects.

According to an eighth aspect, a communication system is provided, including a first device and a second device. The first device is configured to perform the communication method according to the first aspect, and the second device is configured to perform the communication method according to the third aspect.

Optionally, the communication system further includes a third device, and the third device is configured to perform the communication method according to the second aspect.

According to a ninth aspect, a computer-readable storage medium is provided. The computer-readable storage medium is configured to store a computer program or instructions. When the computer program or the instructions are run, the method performed by the first device, the second device, or the third device according to the foregoing aspects is implemented.

According to a tenth aspect, a computer program product including instructions is provided. When the computer program product is run on a computer, the method according to the foregoing aspects is implemented.

According to an eleventh aspect, a chip system is provided, including a processor and an interface. The processor is configured to: invoke instructions from the interface and run the instructions, to enable the chip system to implement the method according to the foregoing aspects.

### BRIEF DESCRIPTION OF DRAWINGS

FIG. 1 is a diagram of a waveform of a pulse sent by a UWB device;
FIG. 2A to FIG. 2D are diagrams of several structures of a UWB frame;
FIG. 3 is a diagram of a manner of generating a preamble symbol;
FIG. 4 is a diagram of another structure of a UWB frame;
FIG. 5 is a diagram of an application scenario according to an embodiment of this application;
FIG. 6 is a flowchart of a communication method according to an embodiment of this application;
FIG. 7A and FIG. 7B are two diagrams of a location of a second synchronization field according to an embodiment of this application;
FIG. 8A is a diagram of a second field according to an embodiment of this application;
FIG. 8B is another diagram of a second field according to an embodiment of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of a noun indicates "a singular noun or a plural noun", namely, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a single item (piece) or any combination of a plurality of items (pieces). For example, at least one item (piece) of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of obj ects. For example, a first periodicity and a second periodicity may be a same periodicity, or may be different periodicities. In addition, the names do not indicate a difference between duration, application scenarios, priorities, importance degrees, or the like of the two periodicities. In addition, step numbers in embodiments described in this application are merely intended to distinguish between different steps, but are not intended to limit a sequence of the steps. For example, S601 may be performed before or after S602, or may be simultaneously performed with S602.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect to people, things, machines, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wear, smart transportation, a smart city (smart city), an unmanned aerial vehicle, a robot, and the like. The terminal device may be sometimes referred to as UE, a terminal, an access station, a UE station, a remote station, a wireless communication device, a user apparatus, or the like. For ease of description, an example in which the terminal device is UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), a subsequently evolved base station in the 3rd generation partnership project (3rd generation partnership project, 3GPP), and an access node, a wireless relay node, a wireless backhaul node, or the like in a wireless fidelity (wireless fidelity, Wi-Fi) system. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be a road side unit (road side unit, RSU). The following provides descriptions by using an example in which the access network device is a base station. The base station may communicate with the terminal device, or may communicate with the terminal device via a relay station. The terminal device may communicate with a plurality of base stations of different access technologies. The core network device is configured to implement functions such as mobility management, data processing, session management, and policy and charging. Devices implementing a core network function in systems of different access technologies may have different names. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

The following describes technical features in embodiments of this application.

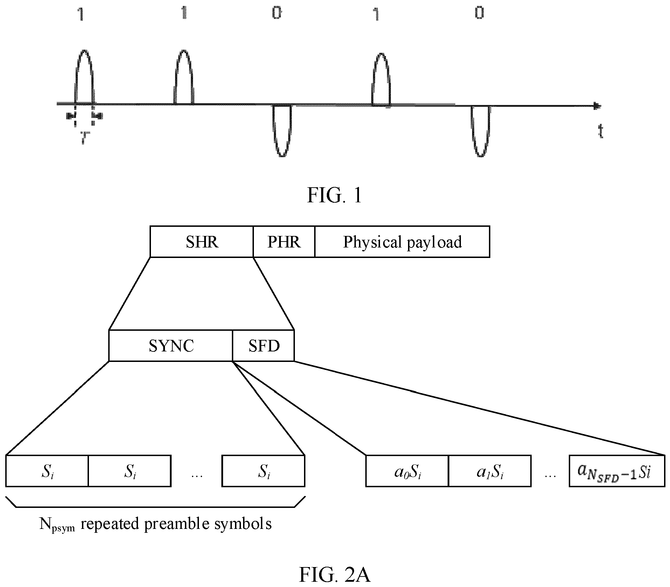

In a UWB technology, nanosecond-scale short pulses may be sent to implement high-precision positioning or data transmission. In a UWB communication system, a sending device may include, in a pulse waveform, information that needs to be transmitted for sending. For example, for a pulse *p*(*t*) with duration of *T,* in a modulation scheme based on binary phase shift keying (binary phase shift keying, BPSK), if an information bit is "1", *p*(*t*) may be sent; or if an information bit is "0", -*p*(*t*) may be sent. A receiving device may determine whether a corresponding information bit is "1" or "0" by detecting whether an amplitude of a received waveform is 1 or -1. It is assumed that an information bit stream that needs to be transmitted by the sending device is "11010", and a waveform of a sent pulse may be shown in FIG. 1.

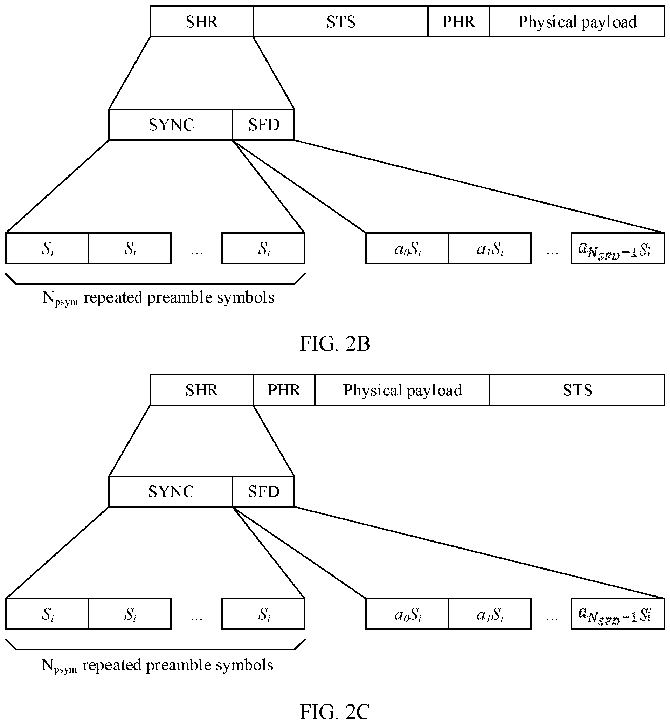

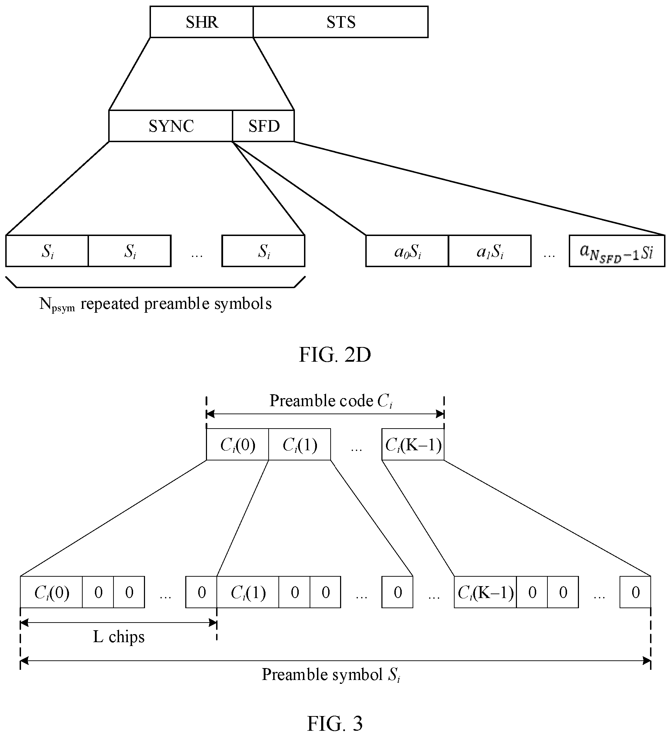

FIG. 2A to FIG. 2D are diagrams of several structures of a UWB frame. A UWB physical layer frame structure may include one or more of the following: a synchronization header (synchronization header, SHR), a physical header (PHY header, PHR), a physical payload (PHY payload), a scrambled timestamp sequence (scrambled timestamp sequence, STS), or the like. The physical payload may also be referred to as a physical load or a physical layer service data unit (PHY service data unit, PSDU). The SHR may further include a synchronization (SYNC) field and/or a start-of-frame delimiter (start-of-frame delimiter, SFD) field, and the like. The SHR is mainly used for synchronization, channel estimation, ranging, or the like. The PHR mainly carries information used to decode data carried in a physical payload. The STS is mainly used for ranging. Ranging may also be described as positioning, sensing, or the like. In embodiments of this application, ranging is used as an example for description.

As shown in any one of FIG. 2A to FIG. 2D, the SYNC field may include N_{psym} repeated preamble symbols, for example, the preamble symbols are represented by *Sᵢ.* In addition, FIG. 3 is a diagram of generating a preamble symbol. It may be learned from FIG. 3 that one preamble symbol Sᵢ may be generated by using one preamble code (preamble code) Cᵢ. The preamble code is, for example, a sequence, and may also be referred to as a preamble code sequence or a preamble sequence. A length of the preamble code Cᵢ is K, or it may be understood that the preamble code Cᵢ includes K elements. L-1 zeros are inserted between two adjacent elements of the preamble code Cᵢ to generate the preamble symbol Sᵢ*.* That is, a length of the preamble symbol Sᵢ is L×K, and a total of L×K chips (chips) are occupied. L is an integer greater than or equal to 1. For example, L may be determined based on factors such as a multipath delay spread of a channel. A length of each chip is T_{c}, and may be used to send a short pulse. For example, when a channel bandwidth is 500 MHz, T_{c} = 2*ns.* The SFD field may be generated by spreading the preamble symbol Sᵢ by using spreading code *a* = [*a*₀, *a*₁*,···, a*_{N_{SFD-1}}] having a length of N_{SFD}. The receiving device may implement synchronization, channel estimation, or the like by detecting the preamble symbol Sᵢ in the SYNC field from the sending device. For example, the receiving device may perform a correlation operation on a local preamble symbol Sᵢ and a received signal to detect the preamble symbol, and may ensure detection reliability by using a good autocorrelation characteristic of a preamble sequence and a good cross-correlation characteristic between different preamble sequences. The receiving device may determine a start location of the PHR, a start location of the physical payload, or a start location of the STS by detecting the SFD field from the sending device. To be specific, if the receiving device correctly detects the SFD field, it may be considered that the SFD field is followed by the PHR, the physical payload, or the STS. After the SFD field ends, the receiving device may start to decode data carried in the PHR and/or the physical payload, or start to detect the STS. In different parameter configurations, a length of the SHR may be different, and a length of the UWB frame may also be different.

To reduce interference between devices, different sending devices usually use different preamble code. If cross-correlation between preamble code used by a target sending device and preamble code used by an interference sending device is low, a target receiving device may suppress interference by performing a correlation operation on a received signal and the preamble code used by the target sending device. Usually, a longer sequence indicates a better cross-correlation property between different sequences. That is, it is easier to find a sequence set having smaller cross-correlation. Therefore, a format of a preamble symbol used by the sending device may be adjusted based on a channel condition or an interference status. For example, when a channel condition is good or interference is small, a length of preamble code for generating a preamble symbol may be short (for example, a sequence having a length of 31 is used as the preamble code), to reduce overheads of the preamble symbol; or when a channel condition is poor or interference is great, a length of a preamble code for generating a preamble symbol may be long (for example, a sequence having a length of 127 is used as the preamble code), to improve a cross-correlation property by using a long sequence, thereby better suppressing the interference.

In addition, if different sending devices use different preamble symbol formats, the target receiving device needs to further decode a PHR and/or a physical payload only when detecting the preamble symbol format used by the target sending device, and does not need to decode PHRs and/or physical payloads from all sending devices, to reduce decoding complexity of the receiving device.

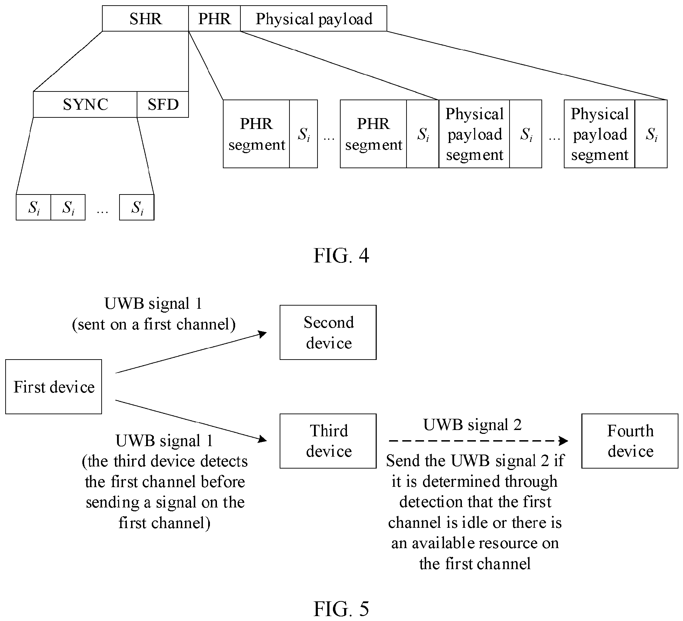

To reduce interference between different devices, a UWB device may perform clear channel assessment (clear channel assessment, CCA) before performing sending. If finding that a channel is idle, the UWB device may perform sending. If finding that a channel is not idle, the UWB device cannot perform sending. The IEEE 802.15.4/4z protocol defines six different CCA modes (modes). Details are as follows:
(1) CCA mode 1: energy detection If energy of a signal received by the receiving device is greater than an energy detection threshold, it is considered that the channel is busy. If energy of a signal received by the receiving device is not greater than an energy detection threshold, it is considered that the channel is idle.
(2) CCA mode 2: carrier sense If the receiving device detects a signal that uses a same physical layer modulation and spreading feature as the receiving device, it is considered that the channel is busy. If the receiving device does not detect a signal that uses a same physical layer modulation and spreading feature as the receiving device, it is considered that the channel is idle.
(3) CCA mode 3: carrier sense and/or energy detection If the receiving device detects a signal that uses a same physical layer modulation and spreading feature as the receiving device, and/or received energy of the signal is greater than an energy detection threshold, it is considered that the channel is busy. If the receiving device does not detect a signal that uses a same physical layer modulation and spreading feature as the receiving device, and/or received energy of the signal is not greater than an energy detection threshold, it is considered that the channel is idle.
(4) CCA mode 4: ALOHA It is always considered that the channel is idle.
(5) CCA mode 5: SHR-based preamble detection If one preamble symbol is detected, it is considered that the channel is busy. If no preamble symbol is detected within a period of time T, it is considered that the channel is idle. T is greater than or equal to a sum of maximum duration of a UWB frame and feedback duration of an acknowledgment (acknowledgment, ACK).
(6) CCA mode 6: preamble detection based on a PHR or a physical payload If one preamble symbol is detected, it is considered that the channel is busy. A physical layer frame structure for the mode 6 is shown in FIG. 4. It may be learned that both the PHR and the physical payload are divided into a plurality of segments (segments). For example, a segment included in the PHR is referred to as a PHR segment, and a segment included in the physical payload is referred to as a physical payload segment. One preamble symbol may be inserted between two adjacent segments included in the PHR and the physical payload, and the inserted preamble symbol is the same as the preamble symbol in the SHR, for example, both are *Sᵢ.* Duration of each segment included in the PHR and the physical payload is predefined.

The foregoing six types of CCA are roughly classified into two detection manners: One is CCA based on energy detection, and the other is CCA based on preamble detection. In the CCA based on preamble detection, a device that performs the CCA needs to detect a preamble symbol. It may be learned from the foregoing descriptions that a preamble symbol is generated based on a preamble sequence, and there may be a large quantity of formats of available preamble sequences in one channel. For example, according to an existing protocol, each channel may support two sequences having a length of 31, four sequences having a length of 127, and eight sequences having a length of 91. In this case, when performing the CCA, the UWB device needs to perform blind detection on preamble symbols in all formats, causing both high complexity and high power consumption. If a length of a sequence is a, it may indicate that the sequence includes a elements. For example, if a length of a sequence is 31, it indicates that the sequence includes 31 elements.

In view of this, the technical solutions in embodiments of this application are provided. In embodiments of this application, a first UWB frame generated by a first device may additionally include a second-type preamble symbol in a specific format. When performing channel access or resource selection, another device only needs to detect the second-type preamble symbol in the specific format, and does not need to blindly detect a preamble symbol in another format. For example, if another device needs to perform channel access, the device can determine, by detecting the second-type preamble symbol, whether a channel is busy. This is equivalent to that a format of a preamble symbol used to perform channel access or resource selection is specified in embodiments of this application. A device may determine, by detecting the preamble symbol in the format, whether a channel is busy, and does not need to detect preamble symbols in an excessive quantity of formats. Therefore, detection complexity of preamble symbols can be reduced, and power consumption of the device can also be reduced.

FIG. 5 shows an application scenario according to an embodiment of this application. FIG. 5 includes a first device, a second device, a third device, and a fourth device. For example, the four devices are all UWB devices. If a device has a UWB function (for example, a UWB chip is disposed in the device), the device may be referred to as a UWB device. Certainly, in addition to the UWB function, the device may further have another function. For example, a mobile phone may have a UWB function, but the mobile phone may further have a call function. This is not limited in embodiments of this application. The first device is a sending end of a UWB signal 1. That is, the first device may send the UWB signal 1, for example, a UWB frame. The UWB frame may be used, for example, for ranging, or may be used for another communication function. This is not limited in embodiments of this application. For example, the first device sends the UWB signal 1 on a first channel, and a receiving end of the UWB signal 1 is the second device. Therefore, the second device may receive the UWB signal 1. In addition, the third device is a device that performs detection, and may also be referred to as a detection device. For example, the third device is about to send a UWB signal, and a busy/idle state of a channel may be determined through detection. In this case, the third device may also receive the UWB signal 1, to perform detection based on the UWB signal. If the third device determines, based on a detection result, that the first channel is idle, or determines that there is an available resource on the first channel, the third device may send a UWB signal 2 on the first channel. Alternatively, if the third device determines that the first channel is busy, or determines that there is no available resource on the first channel, the third device temporarily does not send a UWB signal 2. For example, the first device is a network device or a terminal device, the second device is a network device or a terminal device, and the third device is a network device or a terminal device.

The technical solutions provided in embodiments of this application are described below with reference to the accompanying drawings. In embodiments of this application, all optional steps are indicated by dashed lines in corresponding accompanying drawings. In the following description process, an example in which the methods provided in embodiments of this application are applied to the network architecture shown in FIG. 5 is used. For example, a first device in embodiments of this application is, for example, the first device in the network architecture shown in FIG. 5, a second device in embodiments of this application is, for example, the second device in the network architecture shown in FIG. 5, and a third device in embodiments of this application is, for example, the third device in the network architecture shown in FIG. 5.

In embodiments of this application, channel access includes, for example, a process such as CCA, listen before talk (listen before talk, LBT), or carrier sense multiple access (carrier sense multiple access, CSMA). In the following descriptions, CCA is mainly used as an example.

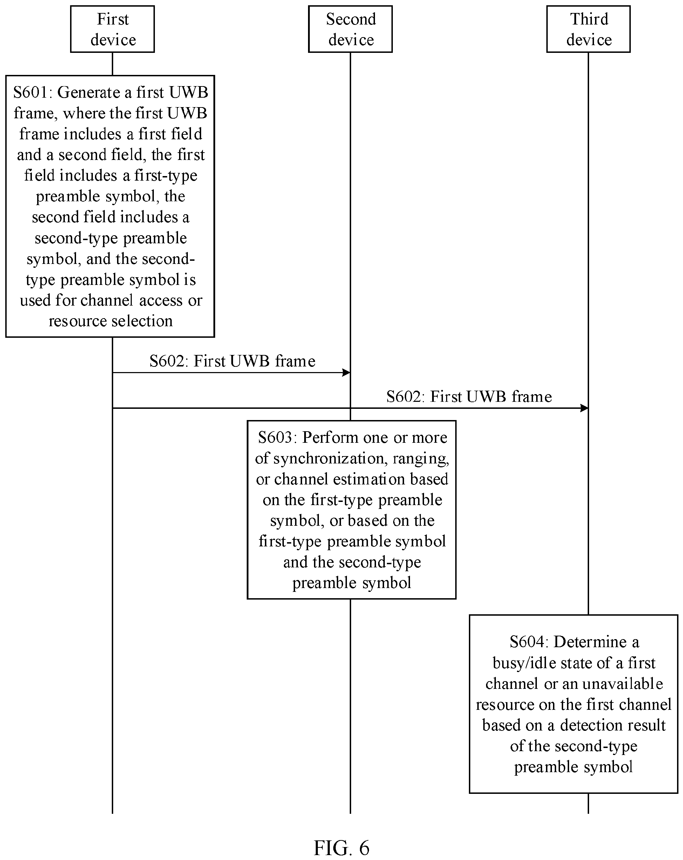

FIG. 6 is a flowchart of a communication method according to an embodiment of this application.

S601: A first device generates a first UWB frame.

The first UWB frame may include a first field and a second field, the first field includes a first-type preamble symbol, and the second field includes a second-type preamble symbol. The first field is, for example, a synchronization field in an SHR of the first UWB frame, and the synchronization field is, for example, referred to as a first synchronization field.

Optionally, the second-type preamble symbol may be used to perform channel access or resource selection. The first-type preamble symbol may be used to perform one or more of synchronization, ranging, channel estimation, or the like. In some implementations, the second-type preamble symbol may be further used to perform one or more of synchronization, ranging, channel estimation, or the like. In other words, the first-type preamble symbol and the second-type preamble symbol may be used to perform one or more of synchronization, ranging, channel estimation, or the like. The first-type preamble symbol is not used to perform channel access, resource selection, and the like. To be specific, a device (for example, a third device) that performs detection does not perform channel access based on the first-type preamble symbol, and does not perform resource selection or the like based on the first-type preamble symbol. Optionally, the first-type preamble symbol is, for example, the preamble symbol Sᵢ described above.

The first-type preamble symbol may have a first-type format, and the second-type preamble symbol may have a second-type format. The first-type format may be the same as or different from the second-type format. The second-type format may be a relatively fixed format. For example, second-type formats in UWB signals sent by the first device or another sending device for a plurality of times may be a same format. The first-type format may be a variable format. For example, the first-type preamble symbol is the preamble symbol Sᵢ described above. It may be learned from the foregoing descriptions that a format of the first-type preamble symbol used by the sending device may be adjusted based on a channel condition or an interference status. For example, a first-type format used between the first device and a second device this time may be the same as or different from a first-type format used next time, or a first-type format used for a UWB signal sent by the first device to a second device may be the same as or different from a first-type format used for a UWB signal sent by the first device to another target receiving device.

A format (namely, the second-type format) of the second-type preamble symbol is, for example, predefined, or is determined by the first device through negotiation with at least one device. The at least one device may include the second device and/or the third device, or may include neither the second device nor the third device; or may be configured by a group header device, where the group header device is a management device used to manage another node in a communication group to which the first device belongs. For example, the second-type preamble symbol is applicable to all UWB devices in a communication system to which the first device belongs. That is, the second-type preamble symbol is set for the communication system. Alternatively, the second-type preamble symbol is applicable to a first-type channel, and the first-type channel may include one or more channels. For example, different types of channels may respectively correspond to respective preamble symbols used to perform channel access or resource selection, and formats of the preamble symbols corresponding to the different types of channels may be the same or different. Alternatively, the second-type preamble symbol is applicable to a first channel. For example, different channels may respectively correspond to respective preamble symbols used to perform channel access or resource selection, and the preamble symbols corresponding to the different channels may be the same or different.

A format of a preamble symbol may indicate the preamble symbol. In other words, a preamble symbol can be determined based on a format of the preamble symbol. For example, a format of a preamble symbol may indicate a value of each element included in the preamble symbol and an arrangement manner of the elements included in the preamble symbol. Optionally, a format of a preamble symbol may further indicate a quantity of elements included in the preamble symbol, or indicate a length of the preamble symbol. The quantity of elements included in the preamble symbol is equal to the length of the preamble symbol. For example, the second-type preamble symbol is a sequence, and a format of the second-type preamble symbol may indicate a value of each element included in the sequence and an arrangement manner of the elements included in the sequence.

Optionally, preamble code for generating the second-type preamble symbol may be any sequence in an existing protocol. For example, the preamble code may be a ternary sequence, for example, a sequence having a length of 31, a sequence having a length of 91, or a sequence having a length of 127. These ternary sequences have, for example, a perfect periodic autocorrelation characteristic. Alternatively, the preamble code may be another sequence, for example, a sequence having a good autocorrelation characteristic, such as an m sequence.

In this embodiment of this application, there are a plurality of different implementations of the second field. The following describes the implementations by using examples.

A. The second field is another synchronization field (which is a synchronization field other than the first synchronization field) in the SHR of the first UWB frame, and the another synchronization field is, for example, referred to as a second synchronization field.

For example, if the third device performs channel access by using the CCA mode 5 described above, for example, performs CCA by detecting a preamble symbol in an SHR from another device, this implementation may be used; or if the third device performs resource selection by detecting the second-type preamble symbol, this implementation may be used.

### a. The third device performs channel access by using the CCA mode 5 described above.

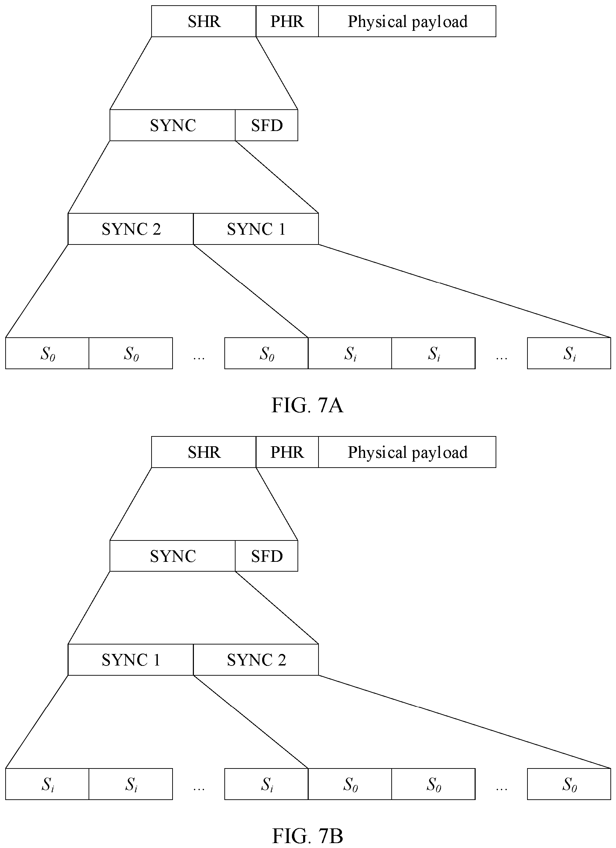

FIG. 7A and FIG. 7B are two diagrams of the second synchronization field. S₀ represents the second-type preamble symbol, Sᵢ represents the first-type preamble symbol, SYNC 1 represents the first synchronization field, and SYNC 2 represents the second synchronization field. In FIG. 7A, the second synchronization field in the SHR is located before the first synchronization field; and in FIG. 7B, the second synchronization field in the SHR is located after the first synchronization field. In other words, a location of the second synchronization field is not limited in embodiments of this application. In addition, if the first UWB frame further includes an SFD field, the SFD field also includes a preamble symbol. In this embodiment of this application, if the second field is the second synchronization field in the SHR, the SFD field may include the first-type preamble symbol, or may include the second-type preamble symbol. Optionally, a type of a preamble symbol included in the SFD field may be predefined, or may be determined by the first device through negotiation with the second device, or may be configured by the first device. For example, the first device may send second configuration information to the second device, to indicate that the SFD field includes the first-type preamble symbol or the second-type preamble symbol. Optionally, if the SFD field includes the second-type preamble symbol, the second configuration information may further indicate a quantity of repetitions of the second-type preamble symbol in the SFD field, and/or indicate an interval between two adjacent second-type preamble symbols in the SFD field.

The third device may perform channel access, resource selection, or the like by detecting the second-type preamble symbol. It may be considered that the third device has no detection requirement for the first-type preamble symbol. For example, the third device may not need to detect the first-type preamble symbol. The second device may perform one or more of synchronization, ranging, or channel estimation by detecting the first-type preamble symbol. The second device may or may not detect the second-type preamble symbol. The following describes several detection manners of the second device.

### (1) First detection manner of the second device

For example, if the second synchronization field is located before the first synchronization field, the first UWB frame includes an SFD field, and the SFD field includes the first-type preamble symbol, the second device may not detect the second-type preamble symbol. For example, the second device may detect the first synchronization field by detecting the first-type preamble symbol, to determine a location of the SFD field. The first-type preamble symbol included in the SFD field is detected, to determine a location of a PHR, a physical payload, or an STS field, thereby completing processing such as data decoding. This format of the first UWB frame can reduce detection complexity of the second device. In addition, this format is more compatible with an existing format. Alternatively, in this format of the first UWB frame, the second device may detect the second-type preamble symbol, for example, detect the second-type preamble symbol in the second synchronization field based on a parameter of the second-type preamble symbol, to complete one or more of synchronization, ranging, channel estimation, or other processing based on the first-type preamble symbol and the second-type preamble symbol. One or more of synchronization, ranging, channel estimation, or other processing is completed based on the first-type preamble symbol and the second-type preamble symbol. Because there are more reference preamble symbols, a processing result may be more accurate.

### (2) Second detection manner of the second device

For example, if the second synchronization field is located before the first synchronization field, the first UWB frame includes an SFD field, and the SFD field includes the second-type preamble symbol, the second device may detect the second-type preamble symbol based on a parameter of the second-type preamble symbol. For example, the second device may first detect the first-type preamble symbol, perform synchronization based on the first-type preamble symbol, determine a start location of the first-type preamble symbol and/or a start location of the second-type preamble symbol, and then detect the second-type preamble symbol included in the SFD field, to determine a location of a PHR, a physical payload, or an STS field, thereby completing processing such as data decoding. Alternatively, in this format of the first UWB frame, the second device may detect the second-type preamble symbol at the beginning. In this case, the second device may detect the second-type preamble symbol in the second synchronization field, so that one or more of synchronization, ranging, channel estimation, or other processing may be completed based on the first-type preamble symbol and the second-type preamble symbol.

### (3) Third detection manner of the second device

For example, if the second synchronization field is located after the first synchronization field, the first UWB frame includes an SFD field, and the SFD field includes the first-type preamble symbol, the second device may not detect the second-type preamble symbol. For example, the second device may first detect the first-type preamble symbol. In this case, the first-type preamble symbol in the first synchronization field may be detected, and a location of the second synchronization field may be determined based on the detection. The second device may determine an end location of the second synchronization field based on a parameter of the second-type preamble symbol, to correspondingly determine a location of the SFD field. The second device can determine a location of a PHR, a physical payload, or an STS field by detecting the first-type preamble symbol included in the SFD field, thereby completing processing such as data decoding. Alternatively, in this format of the first UWB frame, the second device may detect the second-type preamble symbol, for example, detect the second-type preamble symbol in the second synchronization field based on a parameter of the second-type preamble symbol after detecting the first-type preamble symbol in the first synchronization field, to complete one or more of synchronization, ranging, channel estimation, or other processing based on the first-type preamble symbol and the second-type preamble symbol.

### (4) Fourth detection manner of the second device

For example, if the second synchronization field is located after the first synchronization field, the first UWB frame includes an SFD field, and the SFD field includes the second-type preamble symbol, the second device may detect the second-type preamble symbol based on a parameter of the second-type preamble symbol. For example, the second device may first detect the first-type preamble symbol. In this case, the first-type preamble symbol in the first synchronization field may be detected, and a location of the second synchronization field may be determined based on the detection. The second device may determine an end location of the second synchronization field based on the parameter of the second-type preamble symbol, to correspondingly determine a location of the SFD field. Alternatively, the second device may detect the second-type preamble symbol in the second synchronization field, to determine a location of the SFD field. Then, the second device can determine a location of a PHR, a physical payload, or an STS field by detecting the second-type preamble symbol included in the SFD field, thereby completing processing such as data decoding. In this format of the first UWB frame, if the second device does not detect the second-type preamble symbol in the second synchronization field, the second device may complete one or more of synchronization, ranging, channel estimation, or other processing based on the first-type preamble symbol. Alternatively, if the second device detects the second-type preamble symbol in the second synchronization field, the second device may complete one or more of synchronization, ranging, channel estimation, or other processing based on the first-type preamble symbol, or the second device may complete one or more of synchronization, ranging, channel estimation, or other processing based on the first-type preamble symbol and the second-type preamble symbol.

Optionally, the parameter of the second-type preamble symbol in the foregoing various detection manners, for example, includes (or indicates) a format of the second-type preamble symbol; or includes (or indicates) a format of the second-type preamble symbol and a quantity of repetitions of the second-type preamble symbol; or includes (or indicates) a format of the second-type preamble symbol, a quantity of repetitions of the second-type preamble symbol, and an interval between two adjacent second-type preamble symbols. The quantity of repetitions of the second-type preamble symbol, for example, includes a quantity of repetitions of the second-type preamble symbol in the second field (for example, the second synchronization field), and/or includes a quantity of repetitions of the second-type preamble symbol in another field (for example, an SFD field). Alternatively, the quantity of repetitions of the second-type preamble symbol in the another field may not be indicated by the parameter of the second-type preamble symbol, but may be configured by using other information, for example, configured by using the second configuration information sent by the first device.

In the second field or the another field, the second-type preamble symbols may be continuously distributed, or may be discretely distributed. Therefore, the parameter of the second-type preamble symbol may include the interval between two adjacent second-type preamble symbols. The interval may be represented as duration. If the second-type preamble symbols are continuously distributed, the interval between two adjacent second-type preamble symbols is 0. Alternatively, if the second-type preamble symbols are discretely distributed, the interval between two adjacent second-type preamble symbols is greater than 0. In different fields, intervals between two adjacent second-type preamble symbols may be equal or may be unequal. If the intervals are unequal, the intervals may be separately configured by using the parameter of the second-type preamble symbol.

The format that is of the second-type preamble symbol and that is included in the parameter of the second-type preamble symbol is, for example, an index of the second-type preamble symbol. For example, second-type preamble symbols in a plurality of formats may be preset, and a second-type preamble symbol in each format corresponds to one index. In this case, one of the indexes is indicated, to uniquely indicate a second-type preamble symbol. The second device can determine the format of the second-type preamble symbol based on the index.

Alternatively, the format that is of the second-type preamble symbol and that is included in the parameter of the second-type preamble symbol is, for example, a value of each element included in the second-type preamble symbol and arrangement information of the elements. For example, the second-type preamble symbol is a sequence c, and the sequence c is, for example, c₁, _{C2}, ..., cₙ. That is, the sequence c includes n elements, c₁ to cₙ are values of the n elements, and n is a positive integer. In this case, the format of the second-type preamble symbol may include values of the n elements and arrangement information of the n elements. For example, the arrangement information may indicate that c₁ is arranged before c₂, c₂ is arranged before c₃, and the like.

Alternatively, the format that is of the second-type preamble symbol and that is included in the parameter of the second-type preamble symbol is, for example, information about the preamble code for generating the second-type preamble symbol, and a quantity of "0"s to be inserted between two adjacent elements of the preamble code. The information about the preamble code for generating the second-type preamble symbol is, for example, an index of the preamble code, and one piece of preamble code may be uniquely determined based on an index. If the preamble code is determined, values of elements included in the preamble code and an arrangement manner of these elements are also determined. Further, with reference to the quantity of "0"s to be inserted between two adjacent elements of the preamble code, a value of each element included in the second-type preamble symbol and an arrangement manner of these elements may be determined.

The foregoing descriptions are merely examples. In addition, the format of the second-type preamble symbol may further include other content, or the format of the second-type preamble symbol may be indicated in another manner.

In the foregoing several detection manners, an example in which the first UWB frame includes an SFD field is used. If the first UWB frame does not include an SFD field, the second device may not detect the SFD field (or the third device may not detect the SFD field). For example, the second device can determine a location of a PHR, a physical payload, or an STS field based on an end location of the second synchronization field, thereby completing processing such as data decoding.

Optionally, in UWB frames sent by different devices, a quantity of repetitions of the second-type preamble symbol in the second synchronization field and/or an index of the second-type preamble symbol may be the same or may be different.

In the foregoing several detection manners, the second device may detect the second-type preamble symbol based on the parameter of the second-type preamble symbol, and the second device may pre-determine the parameter of the second-type preamble symbol. Optionally, the first device may send first configuration information. The first configuration information may be used to configure the parameter of the second-type preamble symbol, and a receiving end of the first configuration information includes, for example, the second device and/or the third device. If the first device receives the first configuration information, the second device may determine the parameter of the second-type preamble symbol based on the first configuration information. Alternatively, the parameter of the second-type preamble symbol may be determined by the first device through negotiation with another device, and the another device may include the second device and/or the third device. If the another device includes the second device, the second device may learn of a negotiation result. If the another device does not include the second device, the first device may send the parameter that is of the second-type preamble symbol and that is determined through negotiation to the second device. Alternatively, the parameter of the second-type preamble symbol may be a preset value. For example, the preset value may be predefined according to a protocol.

The step that the first device sends the first configuration information to the second device, or the step that the first device negotiates with the another device to determine the parameter of the second-type preamble symbol, for example, is performed before or after S601.

The third device may also detect the second-type preamble symbol based on the parameter of the second-type preamble symbol. A manner in which the third device obtains the parameter of the second-type preamble symbol is similar to a manner in which the second device obtains the parameter of the second-type preamble symbol. For details, refer to the foregoing descriptions. In addition, for content of the parameter of the second-type preamble symbol, refer to the foregoing descriptions. Details are not described again.

In addition, a parameter of the first-type preamble symbol may be configured by the first device to the second device, and the second device may detect the first-type preamble symbol based on the parameter. For example, the first device may also configure the parameter of the first-type preamble symbol by using the first configuration information, or the first device may send other configuration information to configure the parameter of the first-type preamble symbol. A receiving end of the other configuration information may include the second device, or include the second device and the third device. Alternatively, the parameter of the first-type preamble symbol may be determined by the first device through negotiation with another device, or the like. The another device includes, for example, the second device and/or the third device, or may include neither the second device nor the third device. The parameter of the first-type preamble symbol, for example, includes (or indicates) a format of the first-type preamble symbol; or includes (or indicates) a format of the first-type preamble symbol and a quantity of repetitions of the first-type preamble symbol; or includes (or indicates) a format of the first-type preamble symbol, a quantity of repetitions of the first-type preamble symbol, and an interval between two adjacent first-type preamble symbols. The quantity of repetitions of the first-type preamble symbol is, for example, a quantity of repetitions of the first-type preamble symbol in the first synchronization field. It should be noted that, because the format of the first-type preamble symbol is not fixed, to be specific, formats of first-type preamble symbols sent by sending devices may be the same or may be different, and the second device may detect first-type preamble symbols from a plurality of sending devices. Therefore, the second device may determine the first-type preamble symbol from the first device in a blind detection manner. For example, the second device may perform blind detection based on the parameter of the first-type preamble symbol, to determine the first-type preamble symbol from the first device.

### b. The third device performs resource selection by detecting the second-type preamble symbol.

In this embodiment of this application, the first UWB frame may include resource reservation information. For example, the resource reservation information is included in a PHR of the first UWB frame, or is included in a physical payload of the first UWB frame, for example, may be included in a media access control (media access control, MAC) header of the first UWB frame, where the MAC header is carried in the physical payload. For example, the resource reservation information may indicate a time offset between a resource reserved by the first device and a current UWB frame (for example, the first UWB frame), and indicate duration of the resource reserved by the first device. For another example, the resource reservation information may indicate a resource reservation periodicity. That is, the first device may reserve a resource in one or more periodicities. A location of a resource reserved by the first device in one periodicity is, for example, the same as a location of the first UWB frame in the current periodicity. The duration of the resource reserved by the first device is, for example, predefined, or may be the same as duration of the first UWB frame.

Resource selection may also be referred to as resource exclusion or the like. This may be understood as follows: If the third device detects the second-type preamble symbol, the third device may further detect the PHR or the physical payload to obtain the resource reservation information. The third device may determine, based on the resource reservation information, the resource reserved by the first device, so that the third device may determine that the resource reserved by the first device is an unavailable resource. Optionally, the third device may determine, based on power or energy of a signal received from the first device, that the resource reserved by the first device is an unavailable resource. For example, if power or energy of a preamble symbol received by the third device from the first device is greater than a first preset value, the third device determines that the resource reserved by the first device is an unavailable resource.

Optionally, the second synchronization field may be located after the first synchronization field. For this, still refer to FIG. 7B. If the second synchronization field is located before the first synchronization field, to detect the PHR and/or the physical load, the third device further needs to detect the first synchronization field after detecting the second synchronization field. In other words, the third device needs to detect the first-type preamble symbol in addition to the second-type preamble symbol. Consequently, implementation complexity is high. Therefore, to reduce the complexity, it may be assumed that the second synchronization field is located after the first synchronization field. In this case, the third device may learn of a start location of the PHR and/or a start location of the physical load by detecting the second-type preamble symbol in the second synchronization field, and then start to detect the PHR and/or the physical load, without performing blind detection on the first-type preamble symbol in the first synchronization field.

In addition, optionally, the SFD field may include the second-type preamble symbol. Similarly, to detect the PHR, the third device further needs to detect the SFD field to determine a location of the PHR and/or the physical load. If the SFD field includes the first-type preamble symbol, the third device further needs to blindly detect the first-type preamble symbol. To reduce detection complexity, it may be assumed that the SFD field includes the second-type preamble symbol, and the third device may detect the PHR and/or the physical load by detecting the second-type preamble symbol.

Similarly, the third device may detect the second-type preamble symbol based on the parameter of the second-type preamble symbol. Refer to the foregoing descriptions. Details are not described again.

B. The second field includes a PHR and/or a physical payload in the first UWB frame. Alternatively, the second field includes a field in the PHR and/or the physical payload in the first UWB frame, or the second field is included in the PHR and/or the physical payload in the first UWB frame.

For example, if the third device performs channel access by using the CCA mode 6 described above, for example, performs CCA by detecting a preamble symbol in a PHR or a physical payload from another device, this implementation may be used.

The PHR and/or the physical payload include or includes a plurality of segments. For example, a segment included in the PHR may also be referred to as a PHR segment, and a segment included in the physical payload may also be referred to as a physical payload segment. A field used to carry a preamble symbol may be included between adjacent segments in the PHR and/or the physical payload. For example, a field used to carry a preamble symbol between adjacent segments is referred to as a preamble field. In this case, the PHR and/or the physical payload may include a plurality of preamble fields, and each preamble field may carry one or more second-type preamble symbols. For example, if it is considered that the second field is included in the PHR and/or the physical payload in the first UWB frame, the second field may include all or some preamble fields in the PHR and/or the physical payload. In addition, quantities of second-type preamble symbols carried in different preamble fields may be equal or may be unequal.

When detecting the first UWB frame, the second device may determine an interval between adjacent segments based on a parameter of the second-type preamble symbol in the preamble field, so that content included in the segment can be decoded. In this manner, the third device only needs to detect the second field based on the parameter of the second-type preamble symbol, and does not need to decode the PHR. For a description of the parameter of the second-type preamble symbol, refer to the foregoing descriptions. If the second field includes the PHR and/or the physical payload (or the second field may include all or some preamble fields in the PHR and/or the physical payload), a quantity of repetitions that is of the second-type preamble symbol and that is included in the parameter of the second-type preamble symbol is, for example, a quantity of repetitions of the second-type preamble symbol in one of the preamble fields. In different preamble fields, quantities of repetitions of the second-type preamble symbol may be equal.

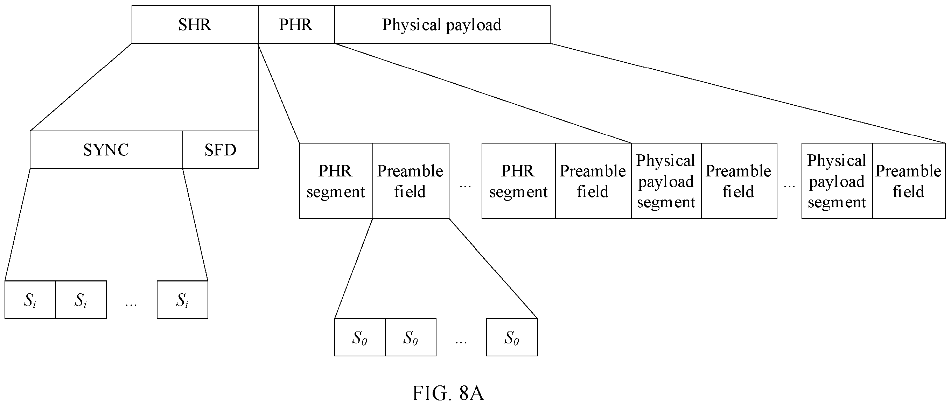

FIG. 8A is a diagram of the second field, where S₀ represents the second-type preamble symbol, and Sᵢ represents the first-type preamble symbol. Both the PHR and the physical payload include segments, a preamble field is included between adjacent segments, and one preamble field may include one or more S₀.

The third device implements channel access by detecting the second-type preamble symbol in the preamble field in the PHR and/or the physical payload, for example, to determine a busy/idle state of a channel. Because the parameter of the second-type preamble symbol in the preamble field is known, the second device may determine an interval between adjacent segments, to decode content included in the PHR and/or the physical payload segment.

In addition, in this manner, the second device may complete one or more of synchronization, ranging, channel estimation, or other processing by detecting the first-type preamble symbol included in the synchronization field in the SHR. For a configuration manner of a parameter of the first-type preamble symbol, refer to the foregoing descriptions.

In the manner B, it is assumed that maximum duration of a PHR segment or a physical payload segment is T1, maximum duration of a preamble field is T2, and maximum duration of the SHR is T3, duration of performing CCA by a device that performs channel access may be greater than or equal to T1+T2+T3, to ensure that the device can detect at least one preamble field.

C. The second field includes the first synchronization field and/or the SFD field in the SHR of the first UWB frame. In addition, the second field further includes a PHR and/or a physical payload in the first UWB frame, or the second field includes a field in a PHR and/or a physical payload in the first UWB frame, or a part of the second field is included in a PHR and/or a physical payload in the first UWB frame.

Alternatively, it is understood that the second field includes one or more of a first subfield, a second subfield, a third subfield, or a fourth subfield. The first subfield is the first synchronization field in the SHR of the first UWB frame. The second subfield is the SFD field. The third subfield is the PHR in the first UWB frame. The fourth subfield is the physical payload in the first UWB frame. Each subfield may include a plurality of segments. For example, a segment included in the first synchronization field may also be referred to as a first synchronization segment, a segment included in the SFD may also be referred to as an SFD segment, a segment included in the PHR may also be referred to as a PHR segment, and a segment included in the physical payload may also be referred to as a physical payload segment. A field used to carry a preamble symbol may be included between adjacent segments in each subfield. For example, a field used to carry a preamble symbol between adjacent segments is referred to as a preamble field, each subfield may include a plurality of preamble fields, and each preamble field may carry one or more second-type preamble symbols. In addition, quantities of second-type preamble symbols carried in different preamble fields may be equal or may be unequal.

For a distribution manner of the second-type preamble symbol in each subfield, a manner of detecting the second-type preamble symbol and/or the first-type preamble symbol by various devices, and other implementation details, refer to the foregoing descriptions.

Optionally, in the manner C, a time interval between adjacent preamble fields in a same subfield (the interval does not include duration of a preamble field, but may be understood as duration of one segment) may be an integer multiple of duration of the first-type preamble symbol (for example, represented as Sᵢ). For example, a time interval between adjacent preamble fields in the first synchronization field (or duration of one first synchronization segment) may be an integer multiple of duration of Sᵢ, or a time interval between adjacent preamble fields in the SFD field (or duration of one SFD segment) may be an integer multiple of duration of Sᵢ, or a time interval between adjacent preamble fields in the PHR (or duration of one PHR segment) may be an integer multiple of duration of Sᵢ, or a time interval between adjacent preamble fields in the physical payload (or duration of one physical payload segment) may be an integer multiple of duration of Sᵢ, to reduce a probability that synchronization/ranging/channel estimation performance deteriorates due to discontinuous sending of a specific Sᵢ.

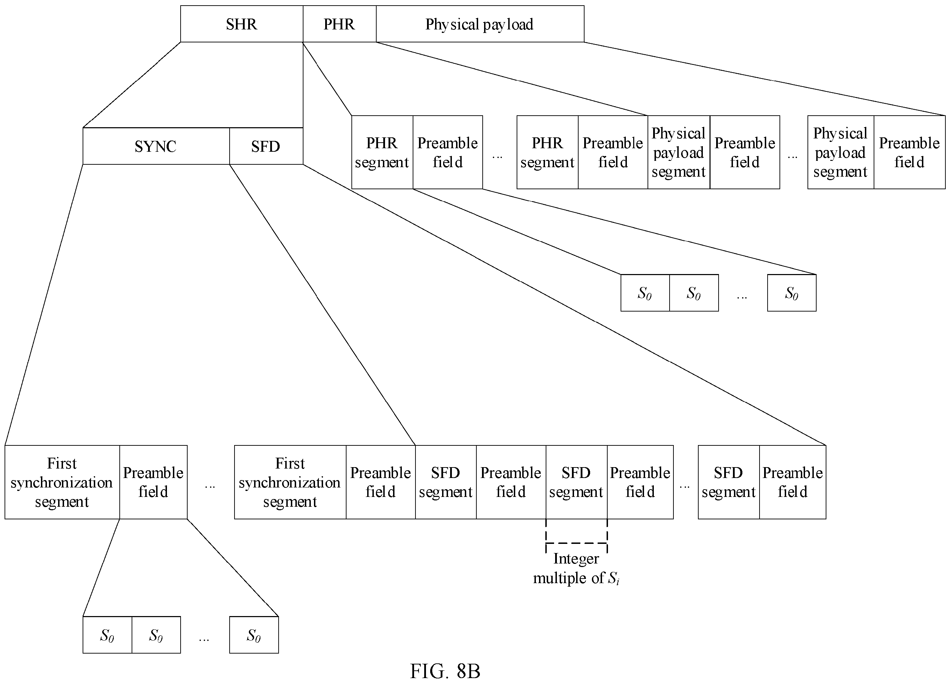

FIG. 8B is a diagram of the second field, where S₀ represents the second-type preamble symbol, and Sᵢ represents the first-type preamble symbol. In FIG. 8B, that the first synchronization field (a field shown by SYNC in FIG. 8B), the SFD field, the PHR, and the physical payload all include segments is used as an example. A preamble field is included between adjacent segments, and one preamble field may include one or more S₀. In a same subfield, an interval between adjacent preamble fields is an integer multiple of duration of Sᵢ*.* FIG. 8B shows an interval between adjacent preamble fields in the SFD field. Intervals that are not shown in FIG. 8B between adjacent preamble fields of the first synchronization field, the PHR, the physical payload, and the like may also be an integer multiple of the duration of Sᵢ*.*

In the manner C, it is assumed that a maximum time interval (or maximum duration of one segment) between adjacent preamble fields in a same subfield is T1, and maximum duration of one preamble field is T2, duration of performing CCA by a device that performs channel access may be greater than or equal to T1+T2, to ensure that the device can detect at least one preamble field.

S602: The first device sends the first UWB frame on the first channel. Correspondingly, the second device receives the first UWB frame on the first channel.

In addition, if the third device expects, for example, to send a UWB signal on the first channel, the third device may perform channel access or resource selection on the first channel. For example, the third device may also detect the first UWB frame (for example, the third device may detect the second-type preamble symbol in the first UWB frame, or may detect the second-type preamble symbol and the first-type preamble symbol in the first UWB frame). Therefore, it may also be considered that the third device receives the first UWB frame in S602.

Optionally, before sending the first UWB frame on the first channel, the first device may also perform channel access or resource selection. For example, the first device may perform channel access or resource selection by detecting a second-type preamble symbol from another device on the first channel. For a specific process, refer to an execution process of the third device. Details are not described again.

S603: The second device performs one or more of synchronization, ranging, or channel estimation based on the first-type preamble symbol. Alternatively, the second device performs one or more of synchronization, ranging, or channel estimation based on the first-type preamble symbol and the second-type preamble symbol.

For a detection manner of the second device, refer to the descriptions of S601. It may be learned from the foregoing descriptions that the second device may detect the first-type preamble symbol and does not detect the second-type preamble symbol, so that detection complexity and power consumption of the second device can be reduced. Alternatively, the second device may detect the second-type preamble symbol and the first-type preamble symbol. For example, the second device performs one or more of synchronization, ranging, channel estimation, or other processing by using the first-type preamble symbol and the second-type preamble symbol, to improve accuracy of a processing result.

S604: The third device determines a busy/idle state of the first channel or an unavailable resource on the first channel based on a detection result of the second-type preamble symbol in the second field. In other words, the third device determines the busy/idle state of the first channel or the unavailable resource on the first channel based on the second-type preamble symbol.

For a detection manner of the third device, refer to the descriptions of S601. S603 may be performed before or after S604, or may be simultaneously performed with S604.

Optionally, the third device may detect energy of the second-type preamble symbol, to determine whether the first channel is busy or determine the unavailable resource on the first channel; or the third device may detect power of the second-type preamble symbol (for example, detect received power of the third device for the second-type preamble symbol), to determine whether the first channel is busy or determine the unavailable resource on the first channel. In this embodiment of this application, detection of the energy of the second-type preamble symbol is used as an example. If the power is detected, a manner of determining whether a channel is busy or determining an unavailable resource on the channel is similar.

In this embodiment of this application, if the third device performs channel access on the first channel, the third device may determine, based on the detection result of the second-type preamble symbol, whether the first channel is busy. If one second-type preamble symbol in the second field (for example, including one or more of the following: the second synchronization field, the SFD, or the PHR and/or the physical payload) is detected, and it is determined that energy of the second-type preamble symbol is greater than a first threshold, it may be determined that the first channel is busy; or if the third device does not detect a second-type preamble symbol, or although the third device detects a second-type preamble symbol in the second field, energy of the second-type preamble symbol is less than or equal to a first threshold, the third device may determine that the first channel is idle. In this case, the third device can determine, by detecting one second-type preamble symbol, whether the first channel is busy, and does not need to detect an excessive quantity of second-type preamble symbols, thereby helping reduce detection complexity.

Alternatively, if the third device determines that average energy of a plurality of detected second-type preamble symbols in the second field is greater than a second threshold, it may be determined that the first channel is busy; or if the third device does not detect second-type preamble symbols, or although the third device detects a plurality of second-type preamble symbols in the second field, average energy of the plurality of second-type preamble symbols is less than or equal to a second threshold, the third device may determine that the first channel is idle. The plurality of second-type preamble symbols may be second-type preamble symbols that are continuously detected, or may be discrete second-type preamble symbols. The first threshold may be equal to or unequal to the second threshold. The average energy of the plurality of second-type preamble symbols is a relatively stable value, and can better reflect a current real state of the first channel. The plurality of second-type preamble symbols are detected, to determine whether the first channel is busy. This may improve accuracy of a determining result.

Alternatively, if the third device determines that average energy of one or more second-type preamble symbols that are in the second field and that are detected within first duration is greater than a third threshold, it may be determined that the first channel is busy; or if the third device does not detect a second-type preamble symbol within first duration, or although the third device detects one or more second-type preamble symbols in the second field within first duration, average energy of the one or more second-type preamble symbols is less than or equal to a third threshold, the third device may determine that the first channel is idle. The plurality of second-type preamble symbols may be second-type preamble symbols that are continuously detected within the first duration, or may be discrete second-type preamble symbols. The one or more second-type preamble symbols may be all or some of the second-type preamble symbols that are detected within the first duration. The first duration may be preset, for example, predefined according to a protocol. Alternatively, the duration may be determined by the third device. For example, the first duration is duration of M preamble symbols. For another example, the first duration is a sum of duration of M preamble symbols and duration of one segment. The M preamble symbols are, for example, M first-type preamble symbols or M second-type preamble symbols, and M is a positive integer. The first threshold, the second threshold, and the third threshold may be equal, or none of the three are equal, or any two of the three are equal, and another one is not equal to the two.

The energy of the second-type preamble symbol is received energy of the third device for the second-type preamble symbol. For example, the third device may detect received power of the second-type preamble symbol, and may determine the received energy for the second-type preamble symbol based on factors such as the received power and receiving time. For example, the third device may detect the received power of the second-type preamble symbol by detecting a parameter such as reference signal received power (reference signal received power, RSRP) or reference signal receiving quality (reference signal receiving quality, RSRQ) of the second-type preamble symbol.

In this embodiment of this application, the third device may alternatively perform resource selection on the first channel. In this case, for a format of the first UWB frame, refer to the descriptions of the manner b in the manner A in S601. In this case, the third device may detect the second-type preamble symbol in the SFD field based on a detection result of the second-type preamble symbol in the second synchronization field. Based on a detection result of the SFD field, the third device may decode the PHR of the first UWB frame, to obtain the resource reservation information included in the PHR. Alternatively, if the resource reservation information is included in the physical payload, the third device may obtain, by decoding the physical payload, the resource reservation information included in the physical payload. The resource reservation information indicates the resource reserved by the first device. For example, the resource indicated by the resource reservation information is also located on the first channel. In this case, the third device may determine that the resource reserved by the first device is an unavailable resource, and a remaining resource other than the unavailable resource is, for example, an available resource. The third device may send a UWB signal by using the available resource.

It may be learned that, if the third device needs to perform channel access, the third device needs to detect the second-type preamble symbol to determine a busy/idle state of a channel; and if the third device needs to perform resource selection, in addition to detecting the second-type preamble symbol, the third device further needs to detect the PHR or the physical payload. When performing resource selection, after detecting the second-type preamble symbol, the third device may not determine, based on the second-type preamble symbol, whether the first channel is busy, but continue to detect the PHR or the physical payload, to determine that the resource indicated by the resource reservation information is an unavailable resource, and a remaining resource other than the unavailable resource is an available resource. Alternatively, after detecting the second-type preamble symbol, the third device may determine, based on the second-type preamble symbol, whether the first channel is busy. In addition, the third device further continues to detect the PHR or the physical payload, to obtain the resource reservation information. If the third device successfully decodes the resource reservation information, and the third device determines, based on the detection result of the second-type preamble symbol, that the first channel is busy, the third device determines that the resource indicated by the resource reservation information is an unavailable resource, and that a remaining resource other than the unavailable resource is an available resource. Alternatively, if the third device fails to decode the resource reservation information, and the third device determines, based on the detection result of the second-type preamble symbol, that the first channel is busy, the third device determines that the first channel is busy, and cannot continue to perform resource selection on the first channel. Alternatively, if the third device fails to decode the resource reservation information, and the third device determines, based on the detection result of the second-type preamble symbol, that the first channel is idle, the third device considers that the first channel is idle. In this case, the first channel as a whole is an available resource. Alternatively, if the third device successfully decodes the resource reservation information, and the third device determines, based on the detection result of the second-type preamble symbol, that the first channel is idle, the third device determines that the resource indicated by the resource reservation information is an unavailable resource, and a remaining resource other than the unavailable resource is an available resource, or the third device may consider that the first channel is idle.

Duration for performing channel access or resource selection by the third device may be preset, for example, predefined according to a protocol. Alternatively, the duration may be determined by the third device. For example, the duration is referred to as second duration, the second duration is, for example, duration of N preamble symbols, and the preamble symbol is, for example, the first-type preamble symbol or the second-type preamble symbol. N is a positive integer, for example, N=8.

Optionally, if the third device determines, based on a channel access result, that the first channel is busy, or determines, based on a resource selection result, that there is no available resource on the first channel (or that all resources on the first channel are unavailable resources), the third device may not send the UWB signal on the first channel. For example, the third device may reselect another channel. Alternatively, the third device may perform channel access or resource selection on the first channel again after performing random backoff for a period of time. Alternatively, the third device may continuously perform detection on the first channel, or perform channel access or resource selection until it is determined that the first channel is idle or it is determined that there is an available resource on the first channel, or until a quantity of attempts reaches a maximum quantity threshold.

In this embodiment of this application, the first UWB frame generated by the first device may include the second-type preamble symbol, and the second-type preamble symbol is used to perform channel access or resource selection. For example, if the third device needs to perform channel access or resource selection, the device can determine a busy/idle state of a channel or an available resource by detecting the second-type preamble symbol. This is equivalent to that a format of a preamble symbol used to perform channel access or resource selection is specified in embodiments of this application. A device that performs detection may determine, by detecting the preamble symbol in the format, whether a channel is busy, and does not need to detect preamble symbols in an excessive quantity of formats. Therefore, detection complexity of preamble symbols can be reduced, and power consumption of the device can also be reduced. A receiving device (for example, the second device) of the first UWB frame may not detect the second-type preamble symbol, but only detect the first-type preamble symbol, so that detection complexity and power consumption can be reduced. Alternatively, the second device may detect both the first-type preamble symbol and the second-type preamble symbol, so that one or more of synchronization, ranging, channel estimation, or other processing can be performed based on the first-type preamble symbol and the second-type preamble symbol, to improve accuracy of a processing result.

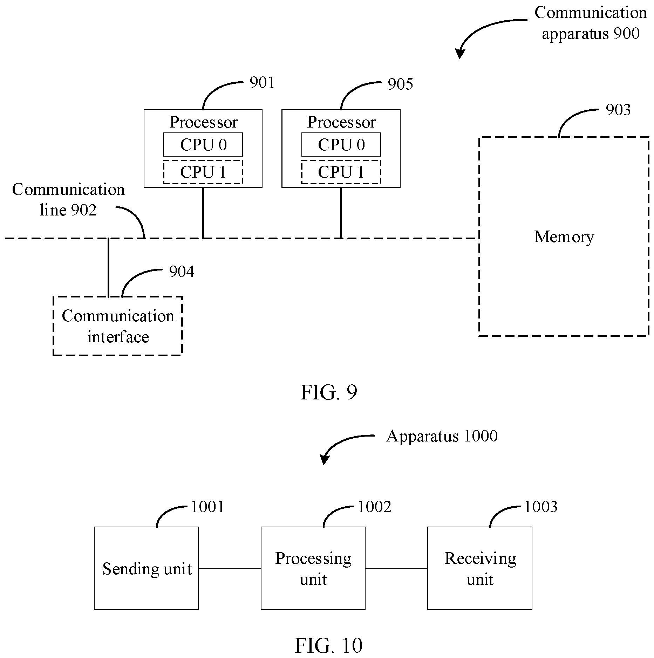

FIG. 9 is a diagram of a structure of a communication apparatus according to an embodiment of this application. The communication apparatus 900 may be the first device or a circuit system of the first device in the embodiment shown in FIG. 6, and is configured to implement the method corresponding to the first device in the foregoing method embodiment. Alternatively, the communication apparatus 900 may be the second device or a circuit system of the second device in the embodiment shown in FIG. 6, and is configured to implement the method corresponding to the second device in the foregoing method embodiment. Alternatively, the communication apparatus 900 may be the third device or a circuit system of the third device in the embodiment shown in FIG. 6, and is configured to implement the method corresponding to the third device in the foregoing method embodiment. For a specific function, refer to the descriptions in the foregoing method embodiment. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent devices, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 900 by using an antenna. Optionally, the transceiver includes a transmitter (transmitter) and a receiver (receiver). For example, the transmitter may be configured to generate a radio frequency (radio frequency) signal from a baseband signal, and the receiver may be configured to convert the radio frequency signal into a baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 902 may include a path for transmitting information between the foregoing components.

The communication interface 904 is configured to communicate, by using any apparatus like a transceiver, with another device or a communication network, for example, the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, or a random access memory (random access memory, RAM) or another type of dynamic storage device that can store information and instructions. Alternatively, the memory 903 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in an instruction or data structure form and that can be accessed by a computer. However, this is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls execution. The processor 901 is configured to execute the computer-executable instructions stored in the memory 903, to implement the steps performed by the first device in the embodiment shown in FIG. 6, or implement the steps performed by the second device in the embodiment shown in FIG. 6, or implement the steps performed by the third device in the embodiment shown in FIG. 6.

Optionally, the computer-executable instructions in this embodiment of this application may also be referred to as application program code. This is not specifically limited in embodiments of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first device, a chip of the second device, or a chip of the third device, the chip includes the processor 901 (may further include the processor 905), the communication line 902, the memory 903, and the communication interface 904. Specifically, the communication interface 904 may be an input interface, a pin, a circuit, or the like. The memory 903 may be a register, a cache, or the like. The processor 901 and the processor 905 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, module division in embodiments of this application is an example, and is merely a logical function division. During actual implementation, there may be another division manner. For example, when each functional module is obtained through division based on each corresponding function, FIG. 10 is a diagram of an apparatus. The apparatus 1000 may be the first device, the second device, or the third device in the foregoing method embodiments, or a chip in the first device, a chip in the second device, or a chip in the third device. The apparatus 1000 includes a sending unit 1001, a processing unit 1002, and a receiving unit 1003.

It should be understood that the apparatus 1000 may be configured to implement the steps performed by the first device, the second device, or the third device in the communication method in embodiments of this application. For related features, refer to the embodiment shown in FIG. 6. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may alternatively be implemented by using a pin, a circuit, or the like.

This application further provides a computer-readable storage medium. The computer-readable storage medium stores a computer program or instructions. When the computer program or the instructions are run, the method performed by the first device, the second device, or the third device in the foregoing method embodiments is implemented. In this way, the functions in the foregoing embodiments may be implemented in a form of a software functional unit and sold or used as an independent product. Based on such an understanding, the technical solutions in this application essentially, or the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first device, the second device, or the third device in any one of the foregoing method embodiments.

An embodiment of this application further provides a processing apparatus, including a processor and an interface. The processor is configured to perform the method performed by the first device, the second device, or the third device in any one of the foregoing method embodiments.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on the computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, for example, a digital signal processor and a microprocessor, a plurality of microprocessors, one or more microprocessors and a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or a storage medium in any other form in the art. For example, the storage medium may be connected to a processor, so that the processor may read information from the storage medium and write information to the storage medium. Optionally, the storage medium may alternatively be integrated into a processor. The processor and the storage medium may be disposed in an ASIC, and the ASIC may be disposed in a terminal device. Optionally, the processor and the storage medium may alternatively be disposed in different components of the terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that, in embodiments of this application, the first device, and/or the second device, and/or the third device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application may need to be performed.

## Claims

1. A communication method, applied to a first device, wherein the method comprises:
generating a first ultra-wide band UWB frame, wherein a first field of the first UWB frame comprises a first-type preamble symbol, a second field of the first UWB frame comprises a second-type preamble symbol, the first field is a first synchronization field in a synchronization header of the first UWB frame, the second-type preamble symbol is used to perform channel access or resource selection, the first-type preamble symbol has a first-type format, and the second-type preamble symbol has a second-type format; and
sending the first UWB frame on a first channel.

2. The method according to claim 1, wherein the first-type preamble symbol is used to perform synchronization, ranging, or channel estimation, or the first-type preamble symbol and the second-type preamble symbol are used to perform synchronization, ranging, or channel estimation.

3. The method according to claim 1 or 2, wherein the first-type preamble symbol is not used to perform channel access and resource selection.

4. The method according to any one of claims 1 to 3, wherein the second field is a second synchronization field in the synchronization header.

5. The method according to claim 4, wherein the first UWB frame further comprises a physical header and/or a physical payload, and the physical header and/or the physical load comprise or comprises resource reservation information indicating a resource reserved by the first device.

6. The method according to claim 5, wherein the synchronization header further comprises a start-of-frame delimiter SFD field, and the SFD field comprises the second-type preamble symbol.

7. The method according to any one of claims 1 to 3, wherein the second field comprises a plurality of segments, and one or more second-type preamble symbols are carried between adjacent segments in the plurality of segments.

8. The method according to claim 7, wherein the second field comprises a physical header and/or a physical payload in the first UWB frame.

9. The method according to claim 8, wherein the second field further comprises one or more of the following: the first synchronization field in the synchronization header, or an SFD field in the synchronization header.

10. The method according to any one of claims 1 to 9, wherein the method further comprises:
sending first configuration information, wherein the first configuration information is used to configure a parameter of the second-type preamble symbol; or
negotiating with another device to determine a parameter of the second-type preamble symbol; or
parameter of the second-type preamble symbol being a preset value.

11. The method according to claim 10, wherein the second device is a target receiving device of the first UWB frame.

12. The method according to claim 10 or 11, wherein
the parameter of the second-type preamble symbol comprises a format of the second-type preamble symbol; or
the parameter of the second-type preamble symbol comprises a format of the second-type preamble symbol and a quantity of repetitions of the second-type preamble symbol; or
the parameter of the second-type preamble symbol comprises a format of the second-type preamble symbol, a quantity of repetitions of the second-type preamble symbol, and an interval between two adjacent second-type preamble symbols.

13. The method according to any one of claims 1 to 12, wherein
the second-type preamble symbol is applicable to all UWB devices in a system to which the first device belongs; or
the second-type preamble symbol is applicable to a first-type channel, and the first channel belongs to the first-type channel; or
the second-type preamble symbol is configured by a group header device, and the group header device is a management device in a communication group to which the first device belongs; or
the second-type preamble symbol is determined by the first device through negotiation with at least one device.

14. A communication method, applied to a third device, wherein the method comprises:
detecting a first UWB frame from a first device on a first channel in a process of performing channel access or resource selection, wherein a first field of the first UWB frame comprises a first-type preamble symbol, a second field of the first UWB frame comprises a second-type preamble symbol, the first field is a first synchronization field in a synchronization header of the first UWB frame, the first-type preamble symbol has a first-type format, and the second-type preamble symbol has a second-type format; and
determining a busy/idle state of the first channel or an unavailable resource on the first channel based on a detection result of the second-type preamble symbol in the second field.

15. The method according to claim 14, wherein the method further comprises:
skipping determining the busy/idle state of the first channel based on the first-type preamble symbol, and skipping determining the unavailable resource on the first channel based on the first-type preamble symbol.

16. The method according to claim 14 or 15, wherein the determining a busy/idle state of the first channel based on a detection result of the second-type preamble symbol in the second field comprises:
if it is detected that energy of one second-type preamble symbol in the second field is greater than a first threshold, determining that the first channel is busy; or
if it is detected that average energy of a plurality of second-type preamble symbols in the second field is greater than a second threshold, determining that the first channel is busy.

17. The method according to any one of claims 14 to 16, wherein the second field is a second synchronization field in the synchronization header of the first UWB frame.

18. The method according to claim 17, wherein the determining an unavailable resource on the first channel based on a detection result of the second-type preamble symbol in the second field comprises:
decoding, based on a detection result of the second-type preamble symbol in the second synchronization field, a physical header and/or a physical load comprised in the first UWB frame;
obtaining resource reservation information comprised in the physical header and/or the physical load, wherein the resource reservation information indicates a resource reserved by the first device; and
determining that the resource reserved by the first device is the unavailable resource.

19. The method according to claim 18, wherein the synchronization header further comprises an SFD field, and the SFD field comprises the second-type preamble symbol.

20. The method according to any one of claims 14 to 16, wherein the second field comprises a physical header and/or a physical payload in the first UWB frame.

21. The method according to claim 20, wherein the second field further comprises one or more of the following: the first synchronization field in the synchronization header, or an SFD field in the synchronization header.

22. The method according to any one of claims 14 to 21, wherein the method further comprises:
receiving first configuration information from the first device, wherein the first configuration information is used to configure a parameter of the second-type preamble symbol; or
negotiating with the first device to determine a parameter of the second-type preamble symbol; or
a parameter of the second-type preamble symbol being a preset value.

23. The method according to claim 22, wherein
the parameter of the second-type preamble symbol comprises a format of the second-type preamble symbol; or
the parameter of the second-type preamble symbol comprises a format of the second-type preamble symbol and a quantity of repetitions of the second-type preamble symbol; or
the parameter of the second-type preamble symbol comprises a format of the second-type preamble symbol, a quantity of repetitions of the second-type preamble symbol, and an interval between two adjacent second-type preamble symbols.

24. The method according to any one of claims 14 to 23, wherein
the second-type preamble symbol is applicable to all UWB devices in a system to which the first device belongs; or
the second-type preamble symbol is applicable to a first-type channel, and the first channel belongs to the first-type channel; or
the second-type preamble symbol is configured by a group header device, and the group header device is a management device in a communication group to which the first device belongs; or
the second-type preamble symbol is determined by the first device through negotiation with at least one device.

25. A communication method, applied to a second device, wherein the method comprises:
detecting a first UWB frame from a first device on a first channel, wherein a first field of the first UWB frame comprises a first-type preamble symbol, a second field of the first UWB frame comprises a second-type preamble symbol, the first field is a first synchronization field in a synchronization header of the first UWB frame, the second-type preamble symbol is used to perform channel access or resource selection, the first-type preamble symbol has a first-type format, and the second-type preamble symbol has a second-type format; and
performing synchronization, ranging, or channel estimation based on the first-type preamble symbol, or performing synchronization, ranging, or channel estimation based on the first-type preamble symbol and the second-type preamble symbol.

26. A communication apparatus, comprising a processor and a memory, wherein the memory is coupled to the processor, and the processor is configured to perform the method according to any one of claims 1 to 13, or configured to perform the method according to any one of claims 14 to 24, or configured to perform the method according to claim 25.

27. A computer-readable storage medium, wherein the computer-readable storage medium is configured to store a computer program, and when the computer program is run on a computer, the computer is enabled to perform the method according to any one of claims 1 to 13, or the computer is enabled to perform the method according to any one of claims 14 to 24, or the computer is enabled to perform the method according to claim 25.

28. A chip system, wherein the chip system comprises:
a processor and an interface, wherein the processor is configured to: invoke instructions from the interface and run the instructions, and when the processor executes the instructions, the method according to any one of claims 1 to 13 is implemented, or the method according to any one of claims 14 to 24 is implemented, or the method according to claim 25 is implemented.

29. A computer program product, wherein the computer program product comprises a computer program, and when the computer program is run on a computer, the computer is enabled to perform the method according to any one of claims 1 to 13, or the computer is enabled to perform the method according to claims 14 to 24, or the computer is enabled to perform the method according to claim 25.
